# EUROPEAN PATENT SPECIFICATION

(11) **EP 1 467 087 B1**
(45) Date of publication and mention of the grant of the patent: **06.06.2007**
(21) Application number: 03008280.4
(22) Date of filing: 09.04.2003
(51) Int. Cl.: F02M 61/18, F02M 61/08

(54) **Spray pattern element and fuel injection valve with a spray pattern element**
Sprühmusterelement und Kraftstoffeinspritzventil mit demselben
Dispositif pour établir le motif de vaporisation d'un jet de liquide pulvérisé et injecteur de carburant avec le dispositif

(43) Date of publication of application: 13.10.2004
(73) Proprietor: Siemens VDO Automotive S.p.A., 56040 Fauglia (Pisa) (IT)
(72) Inventor: D'Arrigo, Angelo, 57123 Livorno (IT)
(74) Representative: Berg, Peter

(56) References cited:
- WO-A-95/05537
- US-A- 5 716 009
- US-A1- 2002 063 175

## Description

The present invention relates in general to a spray pattern element for a fuel injection valve for an automotive-type internal combustion engine and to a fuel injection valve with a spray pattern element. More particularly, it relates to a direct fuel injection valve injecting fuel directly into a combustion chamber, particularly in a combustion chamber of a gasoline combustion engine.

In a fuel injection valve, especially for a gasoline combustion engine, the shape of the injected fuel cloud has to be precisely determined by the geometry of the valve and the valve seat arrangement. It is necessary that for a gasoline direct injection engine in a lean combustion mode the injected fuel cloud hits the ignition plug for a clean combustion of the injected fuel. Depending on the different types of combustion engines, the position of the fuel injection valve in the cylinder head of the combustion engine varies. Also the types of ignition plugs may vary with the result that the position of the ignition regions of the ignition plugs is also different for different types of combustion engines. In the state of the art, it is necessary to produce a special type of injection valve for every type of combustion engine suitable for the respective type of combustion engine. This results in different production machines for different types of fuel injection valves and in high logistic expenditures.

The European patent application EP 0 363 162 A2 describes a fuel injector with variable fuel spray shapes or patterns. The fuel injector assembly has an outer body fixed to a cylinder head and an inner valve that moves to a fixed open position in order to discharge a fuel/compressed air or gas mixture into a combustion chamber. A control sleeve encloses the injector body and can be axially moved with respect to it into various positions in order to interact with the spray pattern of the fuel mixture being discharged from the nozzle to vary the shape or pattern of the fuel spray as a function of different engine operating conditions.

The international patent application WO 02/079637 A1 describes a fuel injection valve, in particular a high-pressure injection valve for directly injecting fuel into a combustion chamber of a mixture-compressing spark injection internal combustion engine. The fuel injection valve comprises a valve seat element on a downstream end of the valve and a perforated disc used as a flow-limiting device which is arranged downstream from the valve seat element. The perforated disc determines the direction of the injected fuel.

The United States patent application US 2002/0063175 A1 describes a fuel injection valve with an injector plate that is welded over its entire periphery to the front end face of a valve seat member. A plurality of fuel injection bores are provided in the injector plate. The bores are parted into primary and secondary groups for injecting fuel toward primary and secondary intake ports.

Document WO 95/05537 A shows a fuel injection nozzle with a pattern forming element attached thereto.

The object of the present invention is to provide a fuel injection valve and a spray pattern element for a fuel injection valve that is easy to produce and that enables providing different types of fuel injection valves for different types of combustion engines.

The task of the invention is attained by a spray pattern element for a fuel injection valve in accordance with claim 1 and by a fuel injection valve according to claim 10. Further advantageous embodiments of the invention are described in the dependant claims.

The spray pattern element according to claim 1 has the advantage that it comprises a sleeve and a pattern-forming element that is fixed to the sleeve via a solid rib that is part of the sleeve. The shape of the sleeve could be used to attach the spray pattern element on a cartridge of a fuel injection valve. This has the advantage that for different types of combustion engines which require different types of spray patterns the main part of the fuel injection valve can be shaped identically and only the spray pattern element has to have a different shape. The different spray pattern elements are attached with the sleeve on the cartridges of the fuel injection valves. As a result, it is not necessary to shape different types of cartridges but only different types of spray pattern elements that can be easily attached to the cartridges of a standard fuel injection valve. Fixing the pattern-forming element via a solid rib to the sleeve has the advantage of the spray pattern element being easy to produce.

An improved spray pattern element comprises two solid ribs that are arranged at opposite sides of the circular rim of the sleeve and that are fixed to the pattern-forming element. Using two solid ribs at opposite sides provides a stable connection between the sleeve and the pattern-forming element. In this embodiment, the position of the pattern-forming element is precisely predetermined and does not change under high pressure or high temperature.

It is advantageous to use a part of the cylindrical sleeve to shape the two ribs. This embodiment causes only small disturbances in the injected fuel.

In a further preferred embodiment of the invention, the pattern-forming element is arranged at least partly along the middle-line of the sleeve.

In a further preferred embodiment of the invention, the shape of the pattern-forming element comprises a diameter that increases in the direction of the injection path. In a preferred embodiment, the pattern-forming element has a conical surface. This has the advantage that the injected fuel is shaped as a circular jet.

In a further preferred embodiment, the pattern-forming element is symmetrical to a plane arranged vertically to a longitudinal axis of the sleeve. This shape has the advantage that less turbulences are caused in the jet.

In a preferred embodiment of the invention, the pattern-forming element is symmetrical to a longitudinal central axis of the sleeve. Using this geometry has the advantage that a symmetrical circular jet is formed by the spray pattern element.

The fuel injection valve with the spray pattern element according to claim 10 has the advantage that it is not necessary to produce different types of fuel injection valves for different types of combustion engines. A standard fuel injection valve can be provided with different types of spray pattern elements depending on the type of combustion engine in which the fuel injection valve is used. Using a standard fuel injection valve reduces the production costs for providing fuel injection valves for different types of combustion engines.

The invention will now be further described by way of an example with reference to the accompanying drawings in which:
Figure 1 shows a cross-sectional view of a fuel injector;
Figure 2 shows a part of the fuel injector in an open position;
Figure 3 shows a perspective view of the cartridge of the fuel injection valve and the spray pattern element;
Figure 4 shows a spray pattern element not falling within the scope of the claimed subject-matter and being useful for understanding the invention.
Figure 5 shows a perspective view of the spray pattern element of Figure 4;
Figure 6 shows a further preferred embodiment of a spray pattern element; and
Figure 7 shows cross-sectional views of different types of pattern-forming elements.

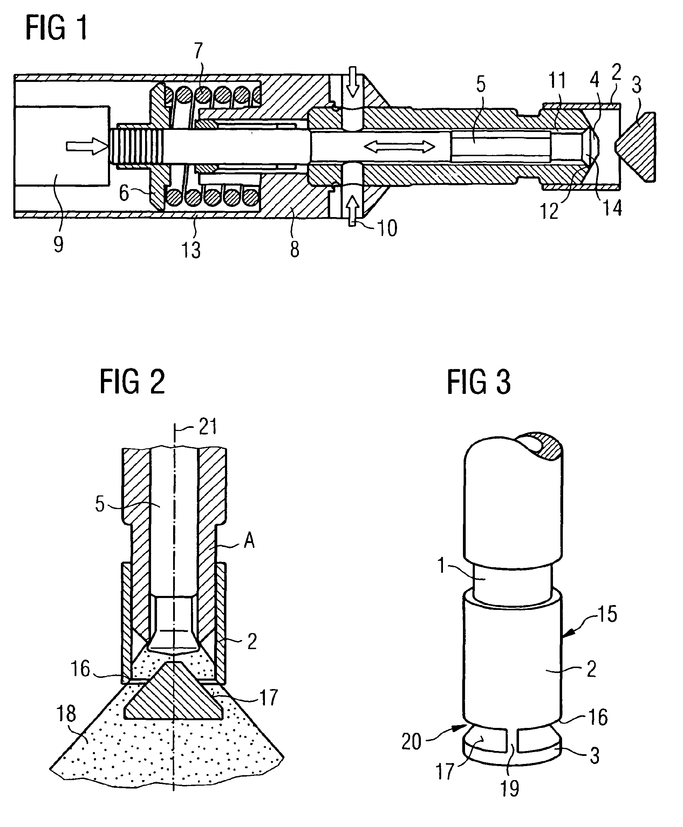

Figure 1 schematically illustrates a fuel injection valve with a housing 13 and a cartridge 1 that comprises a nozzle. The cartridge 1 is connected to the housing 13 by an upper end. Within the housing 13 a holding part 8 is arranged that is connected to the upper end of the cartridge 1. The cartridge 1 has the shape of a hollow cylinder in which a needle 5 is guided. Between the needle 5 and the cartridge 1, a fuel chamber 11 is arranged. The fuel chamber 11 basically shows the shape of a sleeve. The upper end of the needle 5 is guided through the holding part 8 and connected to a washer 6. Between the washer 6 and the holding part 8, a spring 7 is arranged. The lower end of the needle 5 comprises a closing element 4 that is arranged outside of the cartridge 1. The cartridge 1 comprises at a lower opening a circular valve seat 12 that is dedicated to a conical circular sealing face 14 of the closing element 4. The illustrated fuel injection valve is of an outwardly opening type. The spring 7 pushes the washer 6 away from the holding part 8 and biases the sealing face 14 of the closing element 4 to the valve seat 12. The valve is in a closed position. The cartridge 1 comprises an inlet bore 10 which is used for supplying fuel to the fuel chamber 11. The fuel chamber 11 is connected to a fuel line via the fuel inlet 10. The needle 5 is tightly guided within the holding part 8. Above the upper end of the needle 5, an actor 9, in particular a piezoelectric element, is arranged within the housing 13.

At its lower end, the cartridge 1 has a cylindrical shape on which a spray pattern element 15 is attached. The spray pattern element 15 comprises a sleeve 2 and a pattern-forming element 3. The sleeve 2 is pushed onto the cartridge 1 and tightly connected to the cartridge 1. The tight connection may be attained by a press-fit connection or a welding connection. Depending on the combustion engine in which the fuel injection valve is used, different types of spray pattern elements 15 could be used to provide differently shaped jets of injected fuel.

For injecting fuel with the shown fuel injection valve, the actor 9 is controlled to push down the needle 5 against the tension of the spring 7, lifting the sealing face 14 off the valve seat 12. Thereby, the fuel chamber 11 is opened and fuel is injected into the sleeve 2.

Figure 2 shows an open position of the valve in which the closing element 4 is lifted off the valve seat 12 and fuel is injected. The pattern of the injected fuel jet 18 is formed by the shape of the sleeve 2 and the shape of the pattern-forming element 3. Therefore, the shape of the injected jet does not depend on the geometry of the valve seat 12 and the sealing face 14. This has the advantage that abrasion of the valve seat 12 and the sealing face 14 does not influence the spray pattern of the injected jet. The shape of the spray pattern is formed by a circular end face 16 of the sleeve 2 that is arranged at a lower end of the sleeve 2. Furthermore, the spray pattern is formed by a surface 17 of the pattern-forming element 3. The injected jet 18 shows a circular pattern.

Figure 3 shows a perspective view of the cartridge 1 and the spray pattern element 15. The sleeve 2 is connected with the pattern-forming element 3 via a rib 19. In a preferred embodiment, two ribs 19 are provided which are arranged on the opposite side of the sleeve 2. An injection opening 20 is arranged between the end face 16 and the surface 17 of the pattern-forming element 3. The ribs 19 are advantageously shaped in one part with the sleeve 2. The pattern-forming element 3 and the ribs 19 are for example connected by a welding connection. The pattern-forming element 3 and the sleeve 2 are made of metal.

The surface 17 of the pattern-forming element 3 has the shape of a conus that is arranged along a central symmetry axis 21 of the sleeve 2.

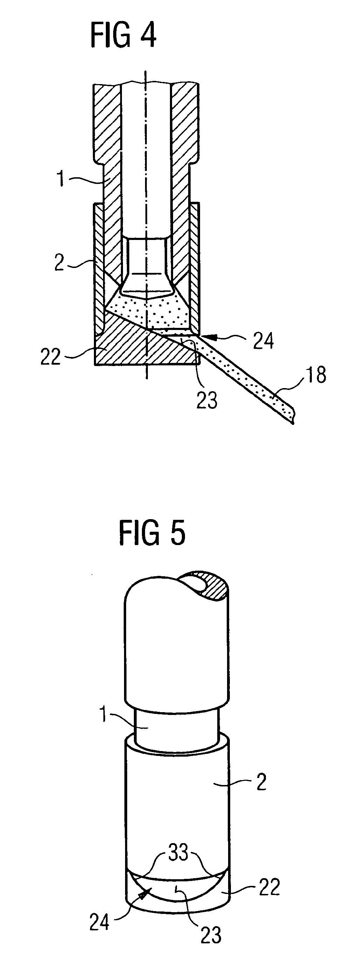

Figure 4 depicts a cross-sectional view of a cartridge 1 and a spray pattern element 15 with a sleeve 2 and a second pattern-forming element 22. The second pattern-forming element 22 has the shape of a cylindrical plate with a guiding surface 23 that is inclined in a given angle to the longitudinal symmetry axis 21 of the sleeve 2. The plate is arranged within the sleeve 2. Between the end face 16 of the sleeve 2 and the guiding face 23 of the second pattern-forming element 22, a second injection opening 24 is arranged. Figure 4 shows an injection valve in an open position that injects a fuel jet 18 through the second injection opening 24. This is used for guiding an injection jet 18 as a closed jet.

Figure 5 shows a perspective view of the fuel injection valve of Figure 4. The second injection opening 24 in this embodiment has the shape of a part of a circular ring with inclined side edges 33.

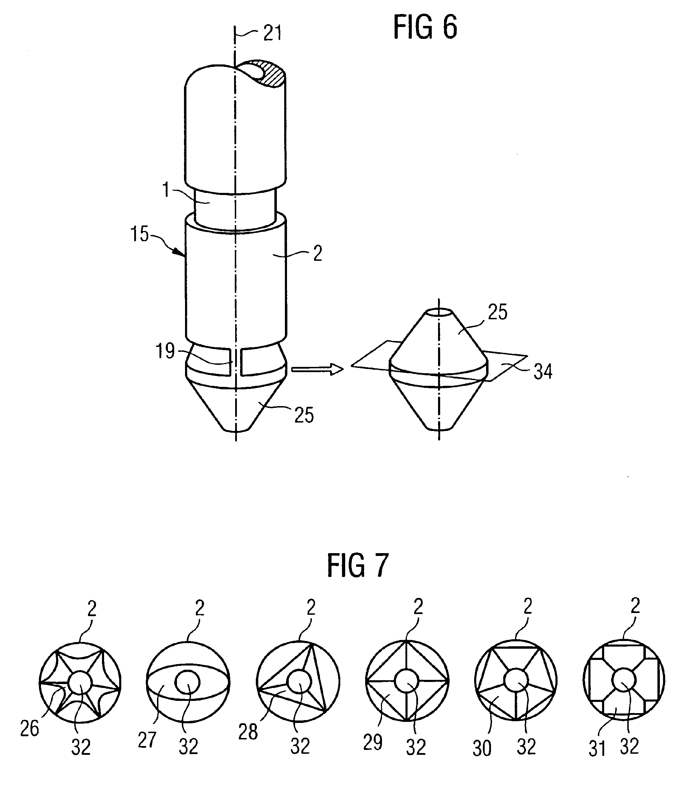

Figure 6 shows a perspective view of a fuel injection valve with a spray pattern element 15 with a third pattern-forming element 25. The third pattern-forming element 25 has the shape of a double-conus. The third pattern-forming element 25 is symmetrical to a plane 34 that is arranged normally to the longitudinal axis of sleeve 2 and to the middle axis 21 of the fuel injection valve. Instead of the double-conus other shapes could be used as well.

Figure 7 shows sectional views of different types of spray pattern elements 15. The spray pattern elements 15 are shown from above, i.e. from the side of cartridge 1. Within the sleeve 2, different types of pattern-forming elements are arranged. In the middle of the pattern-forming elements of Figure 7, top faces 32 are depicted which are a circular face and are arranged at a given distance to the basic face. Each of the pattern-forming elements of Figure 7 comprises a top face 32 and a basic face, whereby the surface between the top face 32 and the basic face is conical and symmetrical to a central axis. The basic shape of the different types is the shape of a conus with different basic faces. The shapes are a parallelogram, a triangle, a polygon, a gear tooth and a spline.

The sleeve 2 could be produced as a welded tube, as a seamless welded tube or a tube formed from a rolled thin sheet. Furthermore, the spray pattern element 15 could be obtained through a deep-drawing operation. The spray pattern element 15 could also be machined as a part from a solid rod or an extruded part.

A first embodiment of Figure 7 shows a fourth pattern-forming element 26 that has the shape of a gear tooth arranged within the sleeve 2. A second embodiment of Figure 7 shows a fifth pattern-forming element 27 with a shape of a conus face with an elliptical ground face. A third embodiment of Figure 7 shows a sixth pattern-forming element 28 in the shape of a triangle. A fourth embodiment of Figure 7 shows a seventh pattern-forming element 29 in the shape of a conus parallelogram. A fifth embodiment of Figure 7 shows an eighth pattern-forming element 30 with a conus polygon. A sixth embodiment of Figure 7 shows a ninth pattern-forming element 31 in the shape of a conus with a basic face in the shape of a cross.

Depending on the embodiment of the invention, the shapes of Figure 7 could also be realized as double shapes with two identical upper and lower faces as shown in Figure 6 for the shape of a double conus.

## Claims

1. Spray pattern element (15) for a fuel injection valve with a pattern forming element (3) and a sleeve (2), the pattern forming element (3) is arranged in a lower end region of the sleeve (2), whereby the sleeve (2) is usable for sticking the spray pattern element on a cylindrical nozzle (1) of a fuel injection valve, **characterized in that** the pattern forming element (3) is fixed to the sleeve (2) via a solid rib (19) which is part of the sleeve (2).

2. Spray pattern element according to claim 1, **characterized in that** the pattern forming element (3) is fixed with two solid ribs (19) of the sleeve (2), that the two ribs (19) are arranged at opposite sides of the circular edge (16) of the sleeve (2).

3. Spray pattern element according to one of the claims 1 or 2, **characterized in that** the rib (19) extends from a lower edge (16) of the sleeve (2) and that the rib (19) is arranged parallel to the longitudinal axis of the sleeve (2).

4. Spray pattern element according to any one of the preceding claims **characterized in that** the pattern forming element (3) is at least partly arranged within the sleeve (2).

5. Spray pattern element according to any one of the preceding claims **characterized in that** the pattern forming element (3) is arranged at least partly in a middle axis of the sleeve (2).

6. Spray pattern element according to any one of the preceding claims **characterized in that** the pattern forming element (3) has a shape with a diameter that increases along an injection direction.

7. Spray pattern element according to claim 6 **characterized in that** the shape of the pattern forming element (3) comprises at least a partly conical face for guiding injected fuel.

8. Spray pattern element according to any one of the claims 1 to 7, **characterized in that** the pattern forming element (3) has a shape that is symmetrical to a plane (34) that is vertical to a longitudinal axis of the sleeve (2).

9. Spray pattern element according to any one of the claims 5 to 8, **characterized in that** the pattern forming element is symmetrical to a longitudinal middle symmetry axis (21) of the sleeve (2).

10. Fuel injection valve with a cartridge (1) with a valve seat (12) at the end of the cartridge (1) and a closing element (4) that is dedicated to the valve seat (12), **characterized in that** a spray pattern element (15) with a pattern forming element (3) and a sleeve (2) according to claim 1 is provided as a separate part and that the sleeve (2) sticks on an end of the cartridge (1) forming a spray pattern channel for injected fuel.

## Patentansprüche

1. Sprühmusterelement (15) für ein Kraftstoffeinspritzventil mit einem Musterformelement (3) und einer Hülse (2), wobei das Musterformelement (3) in einem unteren Endbereich der Hülse (2) angeordnet ist und die Hülse (2) verwendbar ist, um das Sprühmusterelement an einer zylindrischen Düse (1) eines Kraftstoffeinspritzventils zu befestigen, **dadurch gekennzeichnet, dass** das Musterformelement (3) über eine massive Rippe (19), die Teil der Hülse (2) ist, an der Hülse (2) fixiert ist.

2. Sprühmusterelement nach Anspruch 1, **dadurch gekennzeichnet, dass** das Musterformelement (3) mit zwei massiven Rippen (19) der Hülse (2) fixiert ist, wobei die beiden Rippen (19) auf gegenüberliegenden Seiten des kreisförmigen Randes (16) der Hülse (2) angeordnet sind.

3. Sprühmusterelement nach einem der Ansprüche 1 oder 2, **dadurch gekennzeichnet, dass** sich die Rippe (19) von einem unteren Rand (16) der Hülse (2) aus erstreckt und parallel zur Längsachse der Hülse (2) angeordnet ist.

4. Sprühmusterelement nach einem der vorangehenden Ansprüche, **dadurch gekennzeichnet, dass** das Musterformelement (3) zumindest teilweise in der Hülse (2) angeordnet ist.

5. Sprühmusterelement nach einem der vorangehenden Ansprüche, **dadurch gekennzeichnet, dass** das Musterformelement (3) zumindest teilweise in einer Mittelachse der Hülse (2) angeordnet ist.

6. Sprühmusterelement nach einem der vorangehenden Ansprüche, **dadurch gekennzeichnet, dass** das Musterformelement (3) eine Form mit einem Durchmesser besitzt, der in einer Einspritzrichtung ansteigt.

7. Sprühmusterelement nach Anspruch 6, **dadurch gekennzeichnet, dass** die Form des Musterformelementes (3) mindestens eine teilweise konische Fläche zum Führen von eingespritzten Kraftstoff aufweist.

8. Sprühmusterelement nach einem der Ansprüche 1-7, **dadurch gekennzeichnet, dass** das Musterformelement (3) eine Form besitzt, die symmetrisch zu einer Ebene (34) ist, die sich vertikal zu einer Längsachse der Hülse (2) erstreckt.

9. Sprühmusterelement nach einem der Ansprüche 5-8, **dadurch gekennzeichnet, dass** das Musterformelement symmetrisch zu einer Längsmittelsymmetrieachse (21) der Hülse (2) ist.

10. Kraftstoffeinspritzventil mit einer Patrone (1) mit einem Ventilsitz (12) am Ende der Patrone (1) und einem Schließelement (4), das mit dem Ventilsitz (12) zusammenwirkt, **dadurch gekennzeichnet, dass** ein Sprühmusterelement (15) mit einem Musterformelement (3) und einer Hülse (2) gemäß Patentanspruch 1 als separates Teil vorgesehen ist und dass die Hülse (2) an einem Ende der Patrone (1) sitzt und einen Sprühmusterkanal für eingespritzten Kraftstoff bildet.

## Revendications

1. Élément de modèle de jet (15) pour un injecteur de carburant avec un élément de formation de modèle (3) et un manchon (2), l'élément de formation de modèle (3) est agencé dans une zone d'extrémité inférieure du manchon (2), de sorte que le manchon (2) peut être utilisé pour plaquer l'élément de modèle de jet sur un gicleur cylindrique (1) d'un injecteur de carburant,
**caractérisé en ce que**
l'élément de formation de modèle (3) est fixé au manchon (2) par une nervure solide (19) qui fait partie du manchon (2).

2. Élément de modèle de jet selon la revendication 1,
**caractérisé en ce que**
l'élément de formation de modèle (3) est fixé à deux nervures solides (19) du manchon (2), **en ce que** les deux nervures (19) sont agencées sur les côtés opposés du bord circulaire (16) du manchon (2).

3. Élément de modèle de jet selon l'une des revendications 1 ou 2,
**caractérisé en ce que**
la nervure (19) s'étend depuis un bord inférieur (16) du manchon (2) et **en ce que** la nervure (19) est agencée parallèlement à l'axe longitudinal du manchon (2).

4. Élément de modèle de jet selon l'une quelconque des revendications précédentes,
**caractérisé en ce que**
l'élément de formation de modèle (3) est au moins en partie agencé à l'intérieur du manchon (2).

5. Élément de modèle de jet selon l'une quelconque des revendications précédentes,
**caractérisé en ce que**
l'élément de formation de modèle (3) est agencé au moins en partie dans un axe central du manchon (2).

6. Élément de modèle de jet selon l'une quelconque des revendications précédentes,
**caractérisé en ce que**
l'élément de formation de modèle (3) a une forme avec un diamètre qui augmente le long d'une direction d'injection.

7. Élément de modèle de jet selon la revendication 6,
**caractérisé en ce que**
la forme de l'élément de formation de modèle (3) comprend au moins une face partiellement conique pour guider le carburant injecté.

8. Élément de modèle de jet selon l'une quelconque des revendications 1 à 7,
**caractérisé en ce que**
l'élément de formation de modèle (3) a une forme qui est symétrique à un plan (34) vertical par rapport à un axe longitudinal du manchon (2).

9. Élément de modèle de jet selon l'une quelconque des revendications 5 à 8,
**caractérisé en ce que**
l'élément de formation de modèle est symétrique par rapport à un axe de symétrie central longitudinal (21) du manchon (2).

10. Injecteur de carburant comprenant une cartouche (1) avec un siège de soupape (12) à l'extrémité de la cartouche (1) et un élément de fermeture (4) dédié au siège de soupape (12),
**caractérisé en ce qu'**
un élément de modèle de jet (15) comprenant un élément de formation de modèle (3) et un manchon (2) selon la revendication 1 est prévu comme pièce séparée et **en ce que** le manchon (2) est plaqué sur une extrémité de la cartouche (1) formant un canal de modèle de jet pour le carburant injecté.
